# EUROPEAN PATENT APPLICATION

(11) **EP 3 264 344 A1**
(43) Date of publication of application: **03.01.2018**
(21) Application number: 17178997.7
(22) Date of filing: 30.06.2017
(51) Int. Cl.: G06Q 10/06

(54) **MAPPING RULE UPDATING METHOD, DEVICE AND SYSTEM**

(30) Priority: 01.07.2016 CN 201610515032
(71) Applicant: Siemens Aktiengesellschaft, 80333 München (DE)
(72) Inventor: YU, Dan, Orinda, CA 94563 (US); ZHANG, Liang, Beijing, Beijing 100102 (CN)
(74) Representative: Isarpatent

(57) **Abstract**

Provided are a mapping rule updating method, device and system, for timely updating a mapping rule so as to avoid generating a wrong evaluation result. A mapping rule updating method, including: receiving first data generated in a production process; determining a first execution condition of the production process according to the first data based on a mapping rule; generating an evaluation result; the evaluation result being used for indicating whether the first execution condition is in line with a production plan of the production process; acquiring feedback information, the feedback information comprising indication information for indicating whether the evaluation result is correct; and updating the mapping rule according to the feedback information. As the mapping rule can be automatically updated, the work load of manually configuring the mapping rule is reduced greatly, and the accuracy of the mapping rule and the timeliness of the update is improved. By acquiring feedback information, the mapping rule can be updated in real time, so that an accurate evaluation result of the production process can be provided.

## Description

### Technical Field

The present invention relates to the technical field of production management, and in particular to a mapping rule updating method, device and system.

### Background Art

In the process of production management, a production process needs to be closely monitored, such that an error present in and a problem occurring in the production process can be found as early as possible. At present, one production process generally comprises hundreds or thousands of sub-processes, which makes production management more and more complicated.

The technique of digitalization realizes automated production management. After the digitizing technique is used, the following method can be adopted to monitor the production process. Field data generated in a production process is collected by a data collection device, the collected field data is converted into production data described in a production plan according to a pre-determined mapping rule, and an execution condition of the production process is learnt according to the converted production data (such as: determining whether an event in the production process has occurred). In addition, whether the execution condition mentioned above is in line with a production plan can further be determined according to a pre-determined production plan, so as to evaluate the production process.

Taking a production process in a factory as an example, conditions such as a material change, a plant layout change, a work flow adjustment may often happen, and these conditions may possibly result in a change to a mapping rule. If the old mapping rule is not updated, the wrong evaluation result may be generated.

### Summary

In view of this, the embodiments of the present invention provide a mapping rule updating method, device and system for timely updating a mapping rule so as to avoid generating the wrong evaluation result.

In a first aspect, an embodiment of the present invention provides a mapping rule updating method, comprising:
receiving first data generated in a production process;
determining a first execution condition of the production process according to the first data based on a mapping rule;
generating an evaluation result; the evaluation result being used for indicating whether the first execution condition is in line with a production plan of the production process; acquiring feedback information, the feedback information comprising indication information for indicating whether the evaluation result is correct; and
updating the mapping rule according to the feedback information.

As the mapping rule can be automatically updated, the work load of manually configuring the mapping rule is reduced greatly, and the accuracy of the mapping rule and the timeliness of the update is improved. By acquiring feedback information, the mapping rule can be updated in real time, so that an accurate evaluation result of the production process can be provided.

Optionally, after generating the evaluation result and before acquiring the feedback information, the method further comprises: sending evaluation result information for describing the evaluation result to an evaluation feedback device, the evaluation result information being used for the evaluation feedback device to display the evaluation result to an operator; and acquiring the feedback information comprises: receiving the feedback information from the evaluation feedback device, the feedback information being input on the evaluation feedback device by the operator according to the evaluation result.

By using the optional implementation method, the mapping rule can be modified according to the evaluation result input on the feedback device by the operator, so that a feedback opinion of the operator is collected in real time, and the mapping rule is timely updated.

Alternatively, optionally, after generating the evaluation result and before acquiring the feedback information, the method further comprises: sending evaluation result information for describing the evaluation result to an evaluation feedback device; and acquiring the feedback information comprises: receiving the feedback information from the evaluation feedback device, the feedback information being obtained by the evaluation feedback device according to the evaluation result.

By using the optional implementation method, the mapping rule can be modified according to the feedback information generated by the feedback device *per se*.

Further alternatively, optionally, after generating the evaluation result and before acquiring the feedback information, the method further comprises: receiving second data generated subsequently in the production process; and determining a second execution condition of the production process according to the second data based on the mapping rule; and acquiring the feedback information comprises: determining the feedback information according to a time sequence relationship described in the production plan, the time sequence relationship being a relationship between the second execution condition and the first execution condition.

By using the optional implementation method, the mapping rule is updated according to the subsequent execution condition of the production process, so that the purpose of accurately updating the mapping rule and obtaining a precise evaluation result is achieved.

Optionally, if the indication information indicates that the evaluation result is wrong, the feedback information further comprises: parameter modification information for modifying at least one parameter that describes the mapping rule.

By using the optional implementation method, a mapping rule parameter is modified, so that the modification for the mapping rule is more precise.

In a second aspect, an embodiment of the present invention provides a mapping rule updating device, characterized in that the device comprises:
a mapping unit for receiving first data generated in a production process; and determining a first execution condition of the production process according to the first data based on a mapping rule;
a production process evaluation model unit for generating an evaluation result; the evaluation result being used for indicating whether the first execution condition is in line with a production plan of the production process;
a self-learning unit for acquiring feedback information, and updating the mapping rule according to the feedback information; the feedback information comprising indication information for indicating whether the evaluation result is correct.

As the mapping rule can be automatically updated, the work load of manually configuring the mapping rule is reduced greatly, and the accuracy of the mapping rule and the timeliness of the update is improved. By acquiring feedback information, the mapping rule can be updated in real time, so that an accurate evaluation result of the production process can be provided.

Optionally, the production process evaluation model unit is further used for, after the evaluation result is generated and before the self-learning unit acquires the feedback information, sending evaluation result information for describing the evaluation result to an evaluation feedback device, the evaluation result information being used for the evaluation feedback device to display the evaluation result to an operator; and the self-learning unit is specifically used for receiving the feedback information from the evaluation feedback device, the feedback information being input on the evaluation feedback device by the operator according to the evaluation result.

By using the optional implementation method, the mapping rule can be modified according to the evaluation result input on the feedback device by the operator, so that a feedback opinion of the operator is collected in real time, and the mapping rule is timely updated.

Alternatively, optionally, the production process evaluation model unit is further used for, after the evaluation result is generated and before the self-learning unit acquires the feedback information, sending evaluation result information for describing the evaluation result to an evaluation feedback device; and the self-learning unit is specifically used for receiving the feedback information from the evaluation feedback device, the feedback information being obtained by the evaluation feedback device according to the evaluation result.

By using the optional implementation method, the mapping rule can be modified according to the feedback information generated by the feedback device *per se.*

Further alternatively, optionally, the mapping unit is further used for, after the production process evaluation model unit generates the evaluation result and before the self-learning unit acquires the feedback information, receiving second data generated subsequently in the production process, and determining a second execution condition of the production process according to the second data based on the mapping rule; the production process evaluation model unit is further used for determining the feedback information according to a time sequence relationship described in the production plan, the time sequence relationship being a relationship between the second execution condition and the first execution condition; and the self-learning unit is specifically used for acquiring the feedback information from the production process evaluation model unit.

By using the optional implementation method, the mapping rule is updated according to the subsequent execution condition of the production process, so that the purpose of accurately updating the mapping rule and obtaining a precise evaluation result is achieved.

Optionally, if the indication information indicates that the evaluation result is wrong, the feedback information further comprises: parameter modification information for modifying at least one parameter that describes the mapping rule.

By using the optional implementation method, a mapping rule parameter is modified, so that the modification for the mapping rule is more precise.

In a third aspect, an embodiment of the present invention provides a mapping rule updating device, characterized in that the device comprises:
a memory for storing a mapping rule;
a receiver for receiving first data generated in a production process; and
a processor for:
   determining a first execution condition of the production process according to the first data based on a mapping rule;
   generating an evaluation result; the evaluation result being used for indicating whether the first execution condition is in line with a production plan of the production process; acquiring feedback information, the feedback information comprising indication information for indicating whether the evaluation result is correct; and
   updating the mapping rule according to the feedback information.

In a fourth aspect, an embodiment of the present invention provides a production process management system, comprising:
at least one data collection device for collecting first data generated in a production process, and sending the first data to a mapping rule updating device; and
the mapping rule updating device for:
   receiving the first data;
   determining a first execution condition of the production process according to the first data based on a mapping rule;
   generating an evaluation result; the evaluation result being used for indicating whether the first execution condition is in line with a production plan of the production process; acquiring feedback information, the feedback information comprising indication information for indicating whether the evaluation result is correct; and
   updating the mapping rule according to the feedback information.

In a fifth aspect, an embodiment of the present invention provides a computer readable medium, wherein the computer readable medium stores computer instructions thereon, which when executed by a processor, cause the processor to perform the method provided in the first aspect or any possible implementation method of the first aspect.

In the third aspect, fourth aspect and fifth aspect described above, as the mapping rule can be automatically updated, the work load of manually configuring the mapping rule is reduced greatly, improving the accuracy of the mapping rule and the timeliness of the update. By acquiring feedback information, the mapping rule can be updated in real time, so that an accurate evaluation result of the production process can be provided.

### Brief Description of the Drawings

Fig. 1 is a schematic structural diagram of a production process management system provided in an embodiment of the present invention;
Fig. 2 is a schematic structural diagram of another production process management system provided in an embodiment of the present invention;
Fig. 3 is a schematic structural diagram of still another production process management system provided in an embodiment of the present invention;
Figs. 4-7 show four scenarios where the embodiments of the present invention apply;
Fig. 8 is a schematic structural diagram of a production process evaluation device provided in an embodiment of the present invention;
Fig. 9 is a schematic structural diagram of another production process evaluation device provided in an embodiment of the present invention; and
Fig. 10 is a flow chart of a production process evaluation method provided in an embodiment of the present invention.

### Detailed Description of Embodiments

In order to guarantee the quality of products and improve production efficiency, a production manager needs to closely monitor a production process to find and solve an existing error and problem as soon as possible. After the digitizing technique is used, by comparing an event happening in the real physical world with an event happening in a production process plan, automatic monitoring for the production process can be achieved.

In the process of production process monitoring, data generated in a production process needs to be collected, the collected data in the real physical world is mapped into data or an event in a virtual world described by the production plan, and the production process is evaluated according to the mapped production data or event.

At present, some factories may use an enterprise resource planning (ERP) system and/or a manufacturing execution system (MES) to make a production plan, such as: performing production sequence scheduling, defining a production process, allocating resources such as tools, human resources, etc. The system such as the ERP system and MES may generate information for describing a production plan. The ERP system and MES here are examples only, and actually the information about a production plan may have a plurality of optional generation approaches, as long as the production plan can be described. Therefore, a correct mapping rule becomes very important, which decides the accuracy of an evaluation result for the production process.

In an actual production process, conditions such as a product change, a plant layout change, or a flow adjustment may always happen. These conditions may result in a frequent change in the mapping rule. For example: when a sensor is added or an old sensor is replaced, the mapping rule needs to be updated. How to timely update the mapping rule so as to accurately evaluate the production process becomes notably important.

At present, the mapping rule may generally be set in advance, and when the mapping rule needs to be changed, generally experienced technicians need to manually modify the mapping rule, which has the risk of inaccuracy and lack of timely changes.

The embodiments of the present invention provide a mapping rule updating method and device and a production process management system, for automatically updating a mapping rule, so as to timely and accurately update the mapping rule, and accurately evaluate a production process.

In the embodiments of the present invention, for the purpose of distinguishing, collected data generated in a production process is referred to as "field data (or field data on shop floor)", and data described in a production plan is referred to as "production data", and an event described in the production plan is referred to as a "production event".

The embodiments of the present invention will be described in detail below with reference to the accompanying drawings.

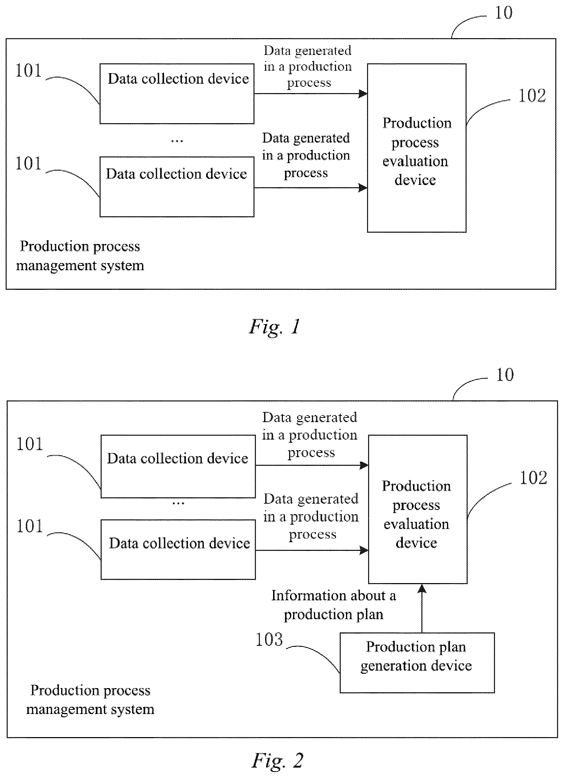

Fig. 1 is a schematic structural diagram of a production process management system 10 provided by an embodiment of the present invention. As shown in Fig. 1, the production management system 10 may comprise: at least one data collection device 101 and a production process evaluation device 102. The production process management system 10 manages a production process in a factory.

The data collection device 101 is used for collecting data generated in a production process, i.e. "field data". The data collection device 101 can be any device that can generate the field data in the production process, such as: a sensor, a programmable logic controller (PLC), a radio frequency identification (RFID) reader/writer, a code scanner, etc. There are many types of sensors, such as: a pressure sensor, a speed sensor, a temperature sensor, a displacement sensor, etc. The PLC may store running state data, etc. of devices, and this data may also serve as the field data to be sent to the production process evaluation device 102.

The field data may comprise: position data of materials, personnel and tools, environmental data (such as: temperature, humidity, light, vibration data, etc.), device state data, etc.

The data collection device 101 sends the collected field data to the production process evaluation device 103, and the production process evaluation device 102 evaluates the production process based on this field data, for example: determining an execution condition of the production process according to the field data, thus determining whether the execution condition of the production process is in line with a production plan.

In the embodiment of the present invention, the production process evaluation device 102 determines the execution condition of the production process according to the field data based on a mapping rule. For example: determining that a certain event has occurred according to the field data, or determining that a certain event has not occurred at a pre-set moment according to the field data, etc.

Material transmission is taken as an example below for description. In the production process, an RFID reader/writer monitors whether a target material has reached a specified region. When a wireless signal emitted by an electronic label of the target material is read by the RFID reader/writer, field data may be sent to the production process evaluation device 102, the field data comprising identification information about the RFID reader/writer.

The mapping rule mentioned above may be a mapping rule from the field data to the production data.

For example: one possible mapping rule is (region A, RFID_1), then the production process evaluation device 102 maps field data containing the identification information of "RFID_1" into "region A" after receiving same, and then determines an execution condition of the production process according to "region A". For example: according to the production plan, the target material needs to be delivered to region A, then the production process evaluation device 102 determines that the execution condition of the production process is in line with the production plan according to the mapped production data, i.e. determining an evaluation result of the production process.

For another example: taking wireless positioning as an example, the mapping rule is (region A: AP1 and AP2). This indicates that if signals from AP1 and AP2 are both detected, then a monitored object is located within region A.

The mapping rule mentioned above may also be a mapping rule from the field data to the production event.

For example: one possible mapping rule is (the target material has reached region A, RFID_1), then the production process evaluation device 102 maps field data containing the identification information of RFID_1 into the production event that "the target material has reached region A" after receiving same, then compares the mapped production event with the production plan, and determines that the execution condition of the production process is in line with the production plan, i.e. determining an evaluation result of the production process.

For another example: one possible mapping rule is (operation 001 has completed, RFID_1), it indicates that if read/write with an identifier of RFID_1 has monitored a monitored target, then operation 001 has been completed.

In an embodiment of the present invention, the production process evaluation device 102 is not only used for evaluating the production process, but also used for updating the mapping rule, wherein the production process evaluation device 102 may acquire feedback information, the feedback information comprising indication information for indicating whether the evaluation result is correct. The production process evaluation device 102 updates the mapping rule according to the feedback information, so as to ensure timely update of the mapping rule.

The mapping rule may be stored in the production process evaluation device 102 in advance, or stored in other devices in advance, and the production process evaluation device 102 may acquire the mapping rule from other devices during production process evaluation.

There may be a plurality of possible processing methods as follows when the production process evaluation device 102 is updating the mapping rule:
processing method I, the feedback information indicates that the evaluation result is correct, then the production process evaluation device 102 does not modify the mapping rule;
processing method II, once the feedback information indicates that the evaluation result is wrong, the production process evaluation device 102 modifies the mapping rule; and
processing method III, when and only when all the pieces of information of which the number exceeds a pre-set number indicate that the evaluation result is wrong, the production process evaluation device 102 modifies the mapping rule.

Using processing method III can avoid inappropriate modification of the mapping rule due to occasional wrong feedback information, and using processing method II can achieve timely modification of the mapping rule.

Using the embodiment of the present invention to update the mapping rule according to the feedback information achieves automatic and timely update of the mapping rule, ensures that the production process management system can evaluate the production process according to the timely updated mapping rule, and guarantees the accuracy of the evaluation result.

Optionally, the production process evaluation device 102 may store information for describing the production plan by itself, such as: information for describing the production plan stored in the form of a file or database. Alternatively, as shown in Fig. 2, the information about the production plan may also be acquired from a production plan generation device 103 which is used for generating the production plan. The production plan generation device 103 may comprise: one or more of an ERP device and an MES device. The production plan may comprise: an operation executed in the production process, a start time and end time of an operation, a resource used in an operation, which device is to execute an operation, etc.

Optionally, the production process evaluation device 102 acquires feedback information from an evaluation feedback device 104. The "explicit feedback method" described below may be referred to for details. Alternatively, the production process evaluation device 102 generates the feedback information *per se,* and the "implicit feedback method" described below may be referred to for details.

### I. Explicit feedback method

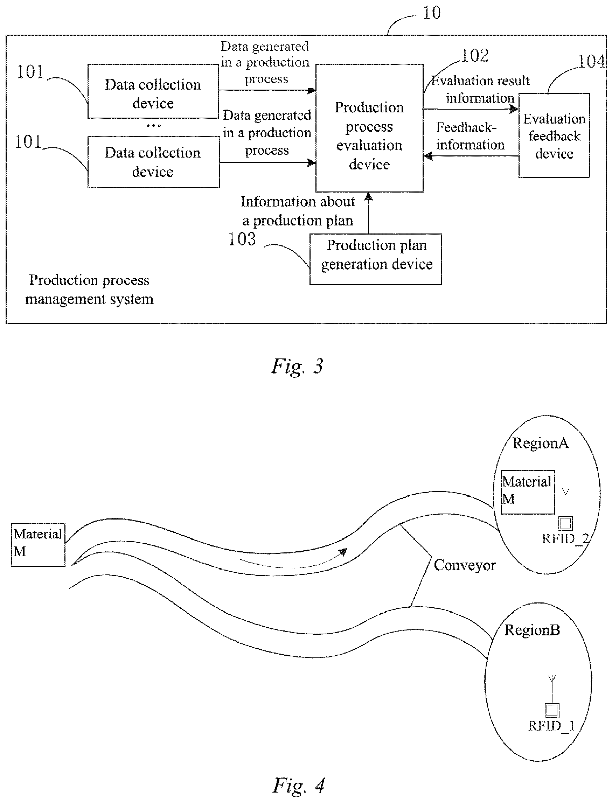

As shown in Fig. 3, the production process evaluation device 102 sends to the evaluation feedback device 104 evaluation result information for describing the evaluation result, and receives feedback information sent from the evaluation feedback device 104.

When generating the feedback information, the evaluation feedback device 104 may use a plurality of implementation methods including the following methods:[Method I]

After receiving the evaluation result information, the evaluation feedback device 104 determines an evaluation result according to the evaluation result information, and displays the evaluation result to an operator. After learning the evaluation result, the operator judges the evaluation result, and inputs feedback information for the evaluation result on the evaluation feedback device 104. The evaluation feedback device 104 then sends the feedback information input by the operator to the production process evaluation device 102.

With regard to method I, the evaluation feedback device 104 may be a console, and the feedback information may be input by the operator on the console. In addition, the evaluation feedback device 104 may also be a control device which monitors and maintains the production process, and may also be a third-party IT platform, and maintenance personnel input the feedback information on the evaluation feedback device 104, wherein the third-party IT platform may have an interface with the system as shown in Fig. 1 or Fig. 2, and data in the production process management system is accessed via the interface and is provided with feedback. This can be deemed as a part of the production process management system, and may also be deemed as not being contained in the production process management system.

Taking a factory as an example, consoles may be distributed at a plurality of places in the factory, and an operator (such as: a worker or a robot) may participate in the entire production process by operating on the console, such as: sending a control instruction, starting the next procedure, or feeding back the operating condition of the production process. The console may be a console in a centralized video monitoring system, and the operator learns the operating condition of the production process by means of video monitoring. The consoles may also be distributed at various places of production lines of the factory, and operators who are respectively responsible for the various production lines monitor the operating condition of the production process at those places.

Taking material transmission as an example, referring to Fig. 4, according to a production plan of the production process, material M should be sent to region A. In Fig. 4, in order to facilitate observing the moving of material M, a transmission method for a conveyor is shown. Actually other transmission methods are also applicable, such as: a method of manual lifting, a method applicable to forklift truck delivery or a transmission method using an automatic guided vehicle (AGV), etc.

In the scenario shown in Fig. 4, due to a factory plant layout change, the identification of the RFID reader/writer originally for monitoring the arrival of a target material in region A changes from the original RFID_1 into RFID_2, and the identification of the RFID reader/writer originally for monitoring the arrival of a target material in region B changes from the original RFID_2 into RFID_1.

However, the mapping rule for mapping field data of a data collection device 101 has not changed. For example: the original mapping rule is (region A, RFID_1) and (region B, RFID_2), indicating that RFID_1 corresponds to region A, for monitoring whether a target material has reached region A; and RFID_2 corresponds to region B, for monitoring whether a target material has reached region B.

In the example shown in Fig. 4, material M has successfully reached region A according to the production plan, and by sending a wireless signal, the RFID reader/writer RFID_2 in region A has sensed the arrival of material M after material M has entered region A and sent field data to the production process evaluation device 102, wherein the field data may comprise identification information about material M and identification information RFID_2 about the RFID reader/writer RFID_2.

After receiving the field data, the production process evaluation device 102 determines that material M has reached region B according to the original mapping rule. It needs to be noted that the judgement result is wrong. According to the production plan, the production process evaluation device 102 determines that material M should reach region A before a certain pre-determined moment, then upon the arrival of the pre-determined moment, it can be determined that material M has not reached region A, then evaluation result information is generated, and the evaluation result information is used for indicating that material M has not reached region A.

After receiving the evaluation result information, the evaluation feedback device 104, which is a console herein, displays an evaluation result to an operator, such as: Displaying on the screen of the console or a voice prompt: material M has not reached region A. However, by monitoring the production process, the operator has determined that material M has reached region A, then feedback information may be input via a button on the console or a key on a computer keyboard, etc.

After receiving the feedback information, the production process evaluation device 102 may update the mapping rule according to the feedback information. Since the original mapping rule is (region A, RFID_1), according to previously collected field data, the production process evaluation device 102 determines that material M has reached the region where the RFID reader/writer RFID_2 is located, then in combination with the feedback information, the production process evaluation device 102 may determine that the new mapping rule may be (region A, RFID_2).

Optionally, the production process evaluation device 102 may receive the same type of feedback information for a plurality of times, that is, the mapping rule is updated after the target material which should reach region A has reached region A, so as to avoid occasional erroneous judgement; and certainly the mapping rule may also be updated when the feedback information is received the first time.

There are a plurality of optional methods for implementing the feedback information, for example: only indicating whether the evaluation result is correct. For another example: not indicating that the evaluation result is wrong, but also indicating what should be a correct evaluation result.

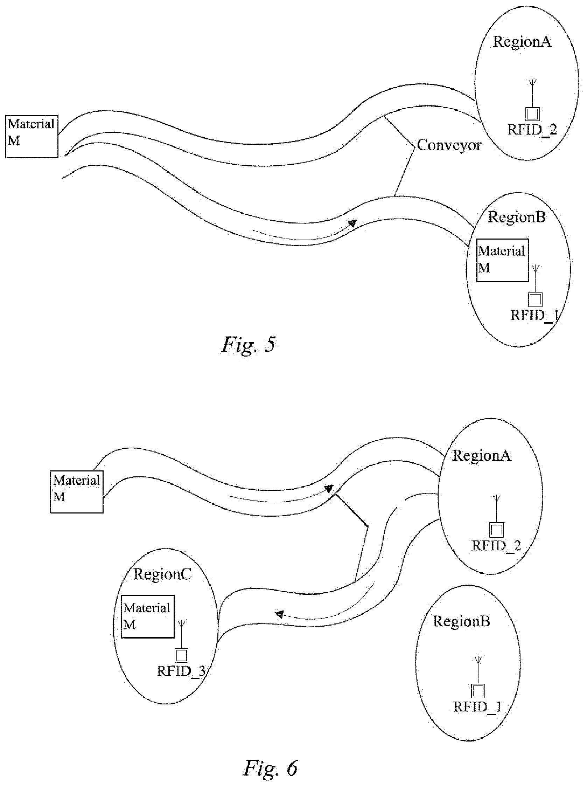

Still taking the above material transmission as an example, in order to more clearly describe the contents of the feedback information, the scenario shown in Fig. 5 is taken as an example. Being the same as the scenario shown in Fig. 4, material M should be transmitted to region A according to the production plan of the production process, likewise, the identification of the RFID reader/writer originally for monitoring the arrival of a target material in region A changes from the original RFID_1 into RFID_2, and the identification of the RFID reader/writer originally for monitoring the arrival of a target material in region B changes from the original RFID_2 into RFID_1.

Being different from the scenario shown in Fig. 4, material M has been erroneously transmitted to region B. However, according to the original mapping rule, the production process evaluation device 102 determines that material M has successfully reached region A according to the production plan. Then, the production process evaluation device 102 sends evaluation result information to the evaluation feedback device 104, i.e. a console, indicating that material M has successfully reached region A. The console displays the evaluation result to the operator. The operator has not monitored that material M has reached region A before a pre-set moment when material M reaches region A at the latest, then inputs feedback information on the console. The feedback information does not only indicate that the evaluation result is wrong, but also indicates that material M has reached region B. After receiving the feedback information, the production process evaluation device 102 may change the original mapping rule (region B, RFID_2) into (region B, RFID_1) according to the feedback information.

### [Method II]

After receiving the evaluation result information, the evaluation feedback device 104 determines feedback information according to the evaluation result information, and sends the feedback information to the production process evaluation device 102.

Method II differs from Method I in that the feedback information is generated by the evaluation feedback device 104 *per se*, without needing to be input by an operator. For example: in a vehicle assembly shop, in working procedure 1, a wheel needs to be mounted on a vehicle; and in working procedure 2, the rotational speed of the wheel is detected by means of a wheel speed detection device. When working procedure 1 has finished, an RFID reader/writer has monitored the wheel, and sends the RFID thereof to the production process evaluation device 102, and the production process evaluation device 102 determines that the wheel has been successfully mounted on the vehicle on this basis; and sends feedback information to the wheel speed detection device in working procedure 2 which serves as the evaluation feedback device 104, indicating that the execution condition of the production process is in line with an evaluation result of a production plan. However, if the wheel is not detected when the wheel speed detection device detects the rotational speed of a wheel, then feedback information is sent to the production process evaluation device 102, indicating that the evaluation result is wrong. The production process evaluation device 102 may update the mapping rule according to the feedback information.

### II. Implicit feedback method

When the implicit feedback method is used, the production process evaluation device 102 generates feedback information thereby, without needing to acquire the feedback information from the evaluation feedback device 104. At this time, the production process management system may be as shown in Fig. 1 or Fig. 2.

When the implicit feedback method is used, the production process evaluation device 102 may receive field data generated in a production process subsequently, and determine a further execution condition of the production process according to the subsequent field data based on a mapping rule. When the feedback information is generated, the production process evaluation device 102 may determine the feedback information according to a time sequence relationship described in the production plan, wherein the time sequence relationship is a relationship between the determined further execution condition of the production process and a previously determined execution condition of the production process.

With reference to Fig. 6, according to the production plan, material M needs to be first transmitted to region A for packaging, then transmitted to region C, and the mapping rule before update includes: (region A, RFID_1), (region B, RFID_2), (region C, RFID_3). Similar to the scenario shown in Fig. 4, the identification of the RFID reader/writer originally for monitoring the arrival of a target material in region A changes from the original RFID_1 into RFID_2, and the identification of the RFID reader/writer originally for monitoring the arrival of a target material in region B changes from the original RFID_2 into RFID_1.

When material M reaches region A, the RFID reader/writer RFID_2 reports the identification RFID_2 thereof to the production process evaluation device 102, and the production process evaluation device 102 obtains an evaluation result that material M has reached region B according to the mapping rule (region B, RFID_2). Before a pre-set moment when material M reaches region A at the latest, the production process evaluation device 102 does not receive the identification RFID_1 sent from the RFID reader/writer RFID_1, then an evaluation result that material M has not reached region A is obtained.

When material M reaches region C, the RFID reader/writer RFID_3 reports the identification RFID_3 thereof to the production process evaluation device 102, and the production process evaluation device 102 obtains an evaluation result that material M has reached region C according to the received RFID_3 and the mapping rule (region C, RFID_3).

The production process evaluation device 102 determines a time sequence relationship that material M needs to reach region A first for packaging and then reaches region C according to the production plan, and learns that there are no conveyor connections between region B and region A and between region B and region C according to recorded plant layout information. Then it is determined that material M has passed region A and the production process is in line with the production plan (since it is impossible that material M reaches region B, but it can only reach region C after passing region A and after being packaged), and therefore the mapping rule (region A, RFID_1) can be updated to (region A, RFID_2).

Optionally, in addition to indication information for indicating whether the evaluation result is correct, if the indication information indicates that the evaluation result is wrong, then the feedback information may also comprise: parameter modification information for modifying at least one parameter that describes the mapping rule, wherein the parameter modification information may directly indicate a new parameter value, or indicate a modification method for the parameter value, for example: with regard to a power judgement threshold, increasing one step length value or decreasing one step length value may be indicated, wherein the step length value may be a default value; or the parameter modification information further comprises information indicating the value of the step length.

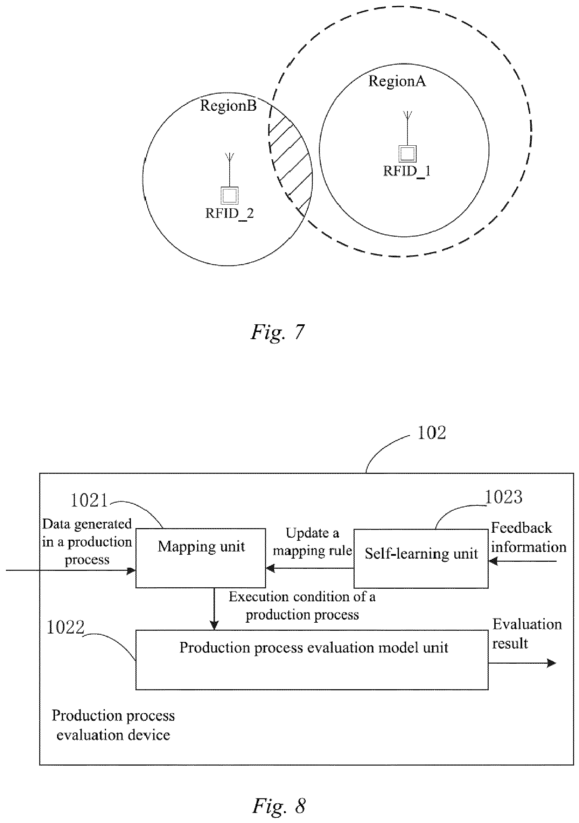

With reference to Fig. 7, region A and region B exist in the plant, wherein an RFID reader/writer RFID_1 is deployed in region A, and an RFID reader/writer RFID_2 is deployed in region B, wherein since a received power threshold value of the RFID reader/writer RFID_1 recorded in the mapping rule is set too low, the power transmitted by an electronic label of a target material received by the RFID reader/writer RFID_1 when the target material reaches the shadow region shown in Fig. 7 exceeds the received power threshold mentioned above, so that the RFID reader/writer RFID_1 may report the identification RFID_1 thereof to a production process evaluation device 102. A production plan generation device 103 determines that the target material has reached region A rather than B on this basis, wherein the received power value may be a received signal strength indication (RSSI).

In Fig. 7, the solid line is used for indicating the actual region size. The dashed line is the size of a region where the target material monitored by the RFID reader/writer according to the received power threshold value of the RFID reader/writer RFID_1 recorded in the mapping rule is located.

When comparing the obtained execution condition of the production process that the target material has reached region A with a production plan, the production plan generation device 103 obtains an evaluation result that the execution condition of the production process is not in line with the production plan.

Evaluation result information for indicating the evaluation result is sent to an evaluation feedback device 104, such as a console, and an operator determines that a target device or material has reached region B, then sends feedback information to the production process evaluation device 102, the feedback information comprising indication information for indicating that the evaluation result is incorrect. Furthermore, the operator may also indicate increasing the received power threshold value of the RFID reader/writer RFID_1 in the mapping rule by one or a plurality of step lengths by inputting parameter modification information via the console, so as to avoid erroneously judging that the target material actually having reached region B has reached region A.

Alternatively, the feedback information only comprises indication information indicating that the evaluation result is incorrect. The production process evaluation device 102 determines that the target material has reached region B previously but was erroneously judged as having reached region A according to a position relationship between region A and region B known in advance and according to a subsequent execution condition of the production process (e.g. the target material has been used). Therefore, it can be determined that the received power threshold value of the RFID reader/writer RFID_1 in the mapping rule is set too low, and thus parameter modification information for increasing the received power threshold value of the reader/writer RFID_1 can be determined, and the received power threshold value of the reader/writer RFID_1 can be further determined through modification according to the parameter modification information.

The constitution of the production process management system 10, interactions between devices and updating solution for the mapping rule provided by the embodiments of the present invention are introduced above. The constitution and implementation method of the production process evaluation device 102 in the production process management system 10 will be introduced below with reference to Fig. 8. Since the production process evaluation device 102 in the embodiment of the present invention achieves updating a mapping rule, the production process evaluation device 102 may also be referred to as a mapping rule updating device.

As shown in Fig. 8, the production process evaluation device 102 may comprise:
a mapping unit 1021 for receiving first data generated in a production process; and determining a first execution condition of the production process according to the first data based on a mapping rule;
a production process evaluation model unit 1022, for generating an evaluation result; the evaluation result being used for indicating whether the first execution condition is in line with a production plan of the production process;
a self-learning unit 1023, for acquiring feedback information, and updating the mapping rule according to the feedback information; the feedback information comprising indication information indicating whether the evaluation result is correct,
wherein information about the production plan can be stored in the production process evaluation device 102 in advance, for example: the information is stored in the production process evaluation model unit, or, as described previously, it can also be acquired from the production plan generation device 103 by means of the production process evaluation model unit 1022.

The feedback information may be generated by the evaluation feedback device 104 and sent to the self-learning unit 1023, or generated by the production process evaluation model unit 1022 and sent to the self-learning unit 1023. With regard to the former condition, the production process evaluation model unit 1022 generates evaluation result information for describing an evaluation result and sends same to an evaluation feedback device 104, wherein, optionally, the production process evaluation model unit 1022 is further used for, after the evaluation result is generated and before the self-learning unit 1023 acquires the feedback information, sending to the evaluation feedback device 104 evaluation result information for describing the evaluation result, the evaluation result information being used for displaying the evaluation result to an operator by the evaluation feedback device 104; and the self-learning unit 1023 is specifically used for receiving the feedback information from the evaluation feedback device 104, the feedback information being input on the evaluation feedback device 104 by the operator according to the evaluation result.

Alternatively, the production process evaluation model unit 1022 is further used for, after the evaluation result is generated and before the self-learning unit 1023 acquires the feedback information, sending to the evaluation feedback device 104 evaluation result information for describing the evaluation result; and the self-learning unit 1023 is specifically used for receiving the feedback information from the evaluation feedback device 104, the feedback information being obtained by the evaluation feedback device 104 according to the evaluation result.

Further alternatively, the mapping unit 1021 is further used for, after the production process evaluation model unit 1022 generates the evaluation result and before the self-learning unit 1023 acquires the feedback information, receiving second data generated subsequently in the production process, and determining a second execution condition of the production process according to the second data based on the mapping rule; the production process evaluation model unit 1022 is further used for determining the feedback information according to a time sequence relationship described in the production plan, the time sequence relationship being a relationship between the second execution condition and the first execution condition; and the self-learning unit 1023 is specifically used for acquiring the feedback information from the production process evaluation model unit 1022.

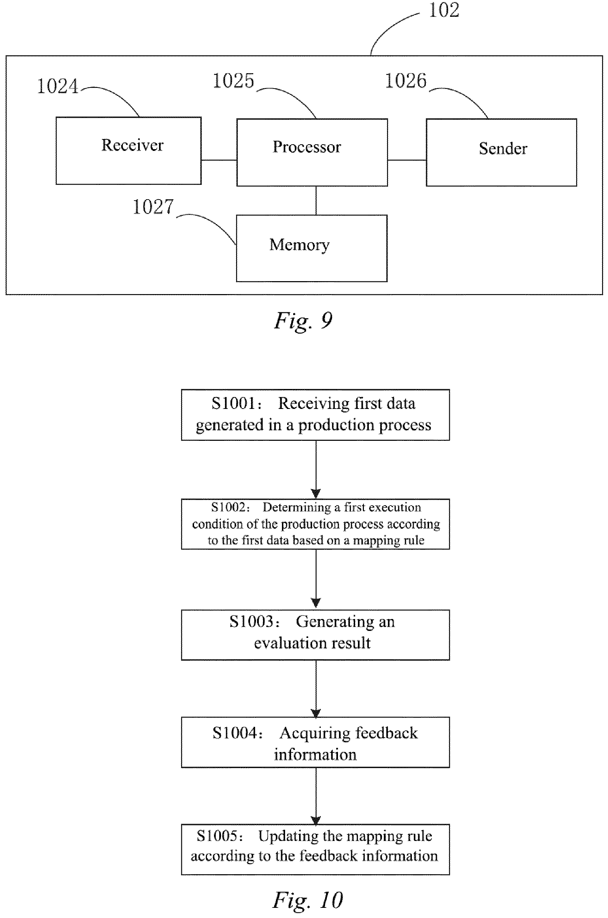

Optionally, if the indication information indicates that the evaluation result is wrong, then the feedback information further comprises: parameter modification information for modifying at least one parameter that describes the mapping rule,
As shown in Fig. 9, the production process evaluation device 102 may comprise a receiver 1024, a processor 1025 and a memory 1027 in specific implementation,
wherein the memory 1027 is used for storing a mapping rule; and
the receiver 1024 is used for accomplishing a receiving operation of the production process evaluation device 102. For example: field data generated in the production process is received from the data collection device 101; optionally, information for describing the production plan may also be received from the production plan generation device 103; and optionally, feedback information may also be received from the evaluation feedback device 104, etc.,
wherein the receiver 1024 may receive data and information in a wireless manner, such as: receiving the field data using a technique of wireless fidelity (WiFi), etc., or data and information may also be received in a wired manner, such as: receiving feedback information using a technique of optical transmission, etc.

The processor 1025 is used for accomplishing a processing operation of the production process evaluation device 102, such as: determining an execution condition of the production process according to field data generated in a production process, evaluating the execution condition of the production process, updating the mapping rule, etc.

Optionally, the processor 1025 is further used for generating evaluation result information for describing the evaluation result. The production process evaluation device 102 further comprises a sender 1026, for sending to the evaluation feedback device 104 evaluation result information, the evaluation result information being used for displaying the evaluation result to an operator by the evaluation feedback device 104; the receiver 1024 is further used for receiving the feedback information from the evaluation feedback device 104, the feedback information being input on the evaluation feedback device 104 by the operator according to the evaluation result; and the processor 1025 is specifically used for acquiring the feedback information from the receiver 1024.

Alternatively, the processor 1025 is further used for generating evaluation result information for describing the evaluation result; the sender 1026 is used for sending the evaluation result information to the evaluation feedback device 104; the receiver 1024 is further used for receiving the feedback information from the evaluation feedback device 104, the feedback information being obtained and sent by the evaluation feedback device 104 according to the evaluation result; and the processor 1025 is specifically used for acquiring the feedback information from the receiver 1024.

Further alternatively, the receiver 1024 is further used for receiving second data generated subsequently in the production process after the evaluation result is generated and before the feedback information is acquired by the processor 1025; the processor 1025 is further used for determining a second execution condition of the production process according to the second data based on the mapping rule; and the processor 1025 is specifically used for determining the feedback information according to a time sequence relationship described in the production plan, the time sequence relationship being a relationship between the second execution condition and the first execution condition.

Optionally, if the indication information indicates that the evaluation result is wrong, then the feedback information further comprises: parameter modification information for modifying at least one parameter that describes the mapping rule,

An embodiment of the present invention further provides a mapping rule updating method. The method can be executed by the aforementioned production process evaluation device 102. As shown in Fig. 10, the method may comprise the following steps:
S1001: receiving first data generated in a production process;
S1002: determining a first execution condition of the production process according to the first data based on a mapping rule;
S1003: generating an evaluation result; the evaluation result being used for indicating whether the first execution condition is in line with a production plan of the production process;
S1004: acquiring feedback information, the feedback information comprising indication information for indicating whether the evaluation result is correct; and
S1005: updating the mapping rule according to the feedback information.

Optionally, after step S1003 of generating an evaluation result and before step S1004 of acquiring feedback information, the method further comprises: sending evaluation result information for describing the evaluation result to an evaluation feedback device, the evaluation result information being used for displaying the evaluation result to an operator by the evaluation feedback device, wherein step S1004 of acquiring feedback information comprises: receiving the feedback information from the evaluation feedback device, the feedback information being input on the evaluation feedback device by the operator according to the evaluation result.

Alternatively, after step S1003 of generating an evaluation result and before step S1004 of acquiring feedback information, the method further comprises: sending evaluation result information for describing the evaluation result to an evaluation feedback device, wherein step S1004 of acquiring feedback information comprises: receiving the feedback information from the evaluation feedback device, the feedback information being obtained by the evaluation feedback device according to the evaluation result.

Further alternatively, after step S1003 of generating an evaluation result and before step S1004 of acquiring feedback information, the method further comprises: receiving second data generated subsequently in the production process; and determining a first execution condition of the production process according to the first data based on a mapping rule; step S1004 of acquiring feedback information comprises: determining the feedback information according to a time sequence relationship described in the production plan, the time sequence relationship being a relationship between the second execution condition and the first execution condition.

Optionally, if the indication information indicates that the evaluation result is wrong, then the feedback information further comprises: parameter modification information for modifying at least one parameter that describes the mapping rule,

Other optional implementation methods of the method may refer to the aforementioned processing of the production process evaluation device 102, and will not be described again herein.

The present invention further provides a computer storage medium, storing an instruction for causing a machine to execute the checking method of program codes as described herein. Specifically, a system or apparatus with a storage medium may be provided, and software program codes for implementing the functions of any one of the embodiments described above are stored on the storage medium, and a computer (or CPU or MPU) of the system or apparatus is caused to read and execute the program codes stored in the storage medium.

In this condition, the program codes *per se* read from the storage medium may implement the functions of any one of the embodiments described above, and therefore the program codes and the storage medium storing the program codes constitute a part of the present invention.

The embodiments of the storage medium for providing the program codes comprise a floppy disk, a hard disk, a magnetic optical disc, an optical disc (such as CD-ROM, CD-R, CD-RW, DVD-ROM, DVD-RAM, DVD-RW and DVD+RW), a magnetic tape, a non-volatile memory card and ROM. Optionally, the program codes may be downloaded from a server computer via a communication network.

In addition, it should be clear that the operating system operating on a computer may be caused to accomplish some or all of the actual operations not only by executing the program codes read out by the computer, but also based on an instruction of the program codes, thereby implementing the functions of any one of the embodiments described above.

In addition, it can be understood that the program codes read out from the storage medium are written into a memory provided in an expansion board inserted into the computer or written into a memory provided in an expansion unit connected to the computer, then a CPU installed on the expansion board or the expansion unit is caused to execute some or all of the actual operations based on an instruction of the program codes, thereby implementing the functions of any one of the embodiments described above.

In summary, by using the embodiments of the present invention, as the mapping rule can be automatically updated, the work load of manually configuring the mapping rule is reduced greatly, improving the accuracy of the mapping rule and the timeliness of the update. By acquiring feedback information, the mapping rule can be updated in real time, so that an accurate evaluation result of the production process can be provided.

It needs to be noted that not all the steps and modules in the flows and structural diagrams of the system described above are necessary, and some steps or modules may be omitted according to practical requirements. The execution order of the various steps is not fixed and may be adjusted according to requirements. The system structure described in the various embodiments above may be a physical structure and may also be a logical structure, i.e. some modules may be implemented by the same physical entity, or some modules may be implemented separately by a plurality of physical entities, or may be implemented together by some components in a plurality of independent devices.

In the various embodiments above, a hardware unit may be implemented mechanically or electrically. For example, a hardware unit may comprise a permanent dedicated circuit or logic (such as a dedicated processor, FPGA or ASIC) to accomplish a corresponding operation. The hardware unit may also comprise a programmable logic or circuit (such as a general-purpose processor or other programmable processors), and may be set temporarily by hardware to accomplish a corresponding operation. The specific implementation method (mechanically, or a dedicated permanent circuit, or a temporarily set circuit) may be determined in consideration of cost and time.

The present invention is illustrated and described in detail above by means of drawings and preferred embodiments; however, the present invention is not limited to these disclosed embodiments. Based on the plurality of embodiments described above, those skilled in the art would know that code checking means in different embodiments above may be combined to obtain more embodiments of the present invention, and these embodiments also fall within the scope of protection of the present invention.

Further embodiments:
1. A mapping rule updating method, characterized in that the method comprises:
   receiving first data generated in a production process;
   determining a first execution condition of the production process according to the first data based on a mapping rule;
   generating an evaluation result; the evaluation result being used for indicating whether the first execution condition is in line with a production plan of the production process;
   acquiring feedback information, the feedback information comprising indication information for indicating whether the evaluation result is correct; and
   updating the mapping rule according to the feedback information.
2. The method of embodiment 1, characterized in that:
   after generating the evaluation result and before acquiring the feedback information, the method further comprises: sending evaluation result information for describing the evaluation result to an evaluation feedback device, the evaluation result information being used for the evaluation feedback device to display the evaluation result to an operator; and
   acquiring the feedback information comprises: receiving the feedback information from the evaluation feedback device, the feedback information being input on the evaluation feedback device by the operator according to the evaluation result.
3. The method of embodiment 1, characterized in that:
   after generating the evaluation result and before acquiring the feedback information, the method further comprises: sending evaluation result information for describing the evaluation result to an evaluation feedback device; and
   acquiring the feedback information comprises: receiving the feedback information from the evaluation feedback device, the feedback information being obtained by the evaluation feedback device according to the evaluation result.
4. The method of embodiment 1, characterized in that:
   after generating the evaluation result and before acquiring the feedback information, the method further comprises: receiving second data generated subsequently in the production process; and determining a second execution condition of the production process according to the second data based on the mapping rule; and
   acquiring the feedback information comprises: determining the feedback information according to a time sequence relationship described in the production plan, the time sequence relationship being a relationship between the second execution condition and the first execution condition.
5. The method of any one of embodiments 1 to 4, characterized in that, if the indication information indicates that the evaluation result is wrong, the feedback information further comprises:
   parameter modification information for modifying at least one parameter that describes the mapping rule.
6. A mapping rule updating device, characterized in that the device comprises:
   a mapping unit for receiving first data generated in a production process; and determining a first execution condition of the production process according to the first data based on a mapping rule;
   a production process evaluation model unit for generating an evaluation result; the evaluation result being used for indicating whether the first execution condition is in line with a production plan of the production process;
   a self-learning unit for acquiring feedback information, and updating the mapping rule according to the feedback information; the feedback information comprising indication information for indicating whether the evaluation result is correct.
7. The device of embodiment 6, characterized in that:
   the production process evaluation model unit is further used for, after the evaluation result is generated and before the self-learning unit acquires the feedback information, sending
   evaluation result information for describing the evaluation result to an evaluation feedback device, the evaluation result information being used for the evaluation feedback device to display the evaluation result to an operator; and
   the self-learning unit is specifically used for receiving the feedback information from the evaluation feedback device, the feedback information being input on the evaluation feedback device by the operator according to the evaluation result.
8. The device of embodiment 6, characterized in that:
   the production process evaluation model unit is further used for, after the evaluation result is generated and before the self-learning unit acquires the feedback information, sending evaluation result information for describing the evaluation result to an evaluation feedback device; and
   the self-learning unit is specifically used for receiving the feedback information from the evaluation feedback device, the feedback information being obtained by the evaluation feedback device according to the evaluation result.
9. The device of embodiment 6, characterized in that:
   the mapping unit is further used for, after the production process evaluation model unit generates the evaluation result and before the self-learning unit acquires the feedback information, receiving second data generated subsequently in the production process, and determining a second execution condition of the production process according to the second data based on the mapping rule;
   the production process evaluation model unit is further used for determining the feedback information according to a time sequence relationship described in the production plan, the time sequence relationship being a relationship between the second execution condition and the first execution condition; and
   the self-learning unit is specifically used for acquiring the feedback information from the production process evaluation model unit.
10. The device of any one of embodiments 6 to 9, characterized in that, if the indication information indicates that the evaluation result is wrong, the feedback information further comprises:
   parameter modification information for modifying at least one parameter that describes the mapping rule.
11. A mapping rule updating device, characterized in that the device comprises:
   a memory for storing a mapping rule;
   a receiver for receiving first data generated in a production process; and
   a processor for:
      determining a first execution condition of the production process according to the first data based on a mapping rule;
      generating an evaluation result; the evaluation result being used for indicating whether the first execution condition is in line with a production plan of the production process;
      acquiring feedback information, the feedback information comprising indication information for indicating whether the evaluation result is correct; and
      updating the mapping rule according to the feedback information.
12. The device of embodiment 11, characterized in that:
   the processor is further used for generating evaluation result information for describing the evaluation result;
   the device further comprises a sender for sending the evaluation result information to an evaluation feedback device, the evaluation result information being used for the evaluation feedback device to display the evaluation result to an operator;
   the receiver is further used for receiving the feedback information from the evaluation feedback device, the feedback information being input on the evaluation feedback device by the operator according to the evaluation result; and
   the processor is specifically used for acquiring the feedback information from the receiver.
13. The device of embodiment 11, characterized in that:
   the processor is further used for generating evaluation result information for describing the evaluation result;
   the device further comprises a sender for sending the evaluation result information to an evaluation feedback device;
   the receiver is further used for receiving the feedback information from the evaluation feedback device, the feedback information being obtained and sent by the evaluation feedback device according to the evaluation result; and
   the processor is specifically used for acquiring the feedback information from the receiver.
14. The device of embodiment 11, characterized in that:
   the receiver is further used for receiving, after the processor generates the evaluation result and before acquiring the feedback information, second data generated subsequently in the production process;
   the processor is further used for determining a second execution condition of the production process according to the second data based on the mapping rule; and
   the processor is specifically used for determining the feedback information according to a time sequence relationship described in the production plan, the time sequence relationship being a relationship between the second execution condition and the first execution condition.
15. The device of any one of embodiments 11 to 14, characterized in that, if the indication information indicates that the evaluation result is wrong, the feedback information further comprises:
   parameter modification information for modifying at least one parameter that describes the mapping rule.
16. A production process management system, characterized in that the system comprises:
   at least one data collection device for collecting first data generated in a production process, and sending the first data to a mapping rule updating device; and
   the mapping rule updating device for:
      receiving the first data;
      determining a first execution condition of the production process according to the first data based on a mapping rule;
      generating an evaluation result; the evaluation result being used for indicating whether the first execution condition is in line with a production plan of the production process;
      acquiring feedback information, the feedback information comprising indication information for indicating whether the evaluation result is correct; and
      updating the mapping rule according to the feedback information.
17. The system of embodiment 16, characterized in that the system further comprises: an evaluation feedback device;
   the mapping rule updating device which is further used for sending evaluation result information for describing the evaluation result to the evaluation feedback device;
   the evaluation feedback device which is used for receiving the evaluation result information, determining the evaluation result according to the evaluation result information, and displaying the evaluation result to an operator, and receiving the feedback information input by the operator according to the evaluation result, and sending the feedback information to the mapping rule updating device; alternatively, the evaluation feedback device which is used for receiving the evaluation result information, determining the feedback information according to the evaluation result information, and sending the feedback information to the mapping rule updating device; and
   the mapping rule updating device which is specifically used for receiving the feedback information from the evaluation result information.
18. A computer readable medium, characterized in that the computer readable medium stores computer instructions thereon, which when executed by a processor, cause the processor to perform the method of any one of embodiments 1 to 5.

## Claims

1. A mapping rule updating method, wherein the method comprises:
receiving first data generated in a production process;
determining a first execution condition of the production process according to the first data based on a mapping rule;
generating an evaluation result; the evaluation result being used for indicating whether the first execution condition is in line with a production plan of the production process;
acquiring feedback information, the feedback information comprising indication information for indicating whether the evaluation result is correct; and
updating the mapping rule according to the feedback information.

2. The method of claim 1, **characterized in that**:
after generating the evaluation result and before acquiring the feedback information, the method further comprises: sending evaluation result information for describing the evaluation result to an evaluation feedback device, the evaluation result information being used for the evaluation feedback device to display the evaluation result to an operator; and
acquiring the feedback information comprises: receiving the feedback information from the evaluation feedback device, the feedback information being input on the evaluation feedback device by the operator according to the evaluation result.

3. The method of claim 1 or 2, **characterized in that**:
after generating the evaluation result and before acquiring the feedback information, the method further comprises: sending evaluation result information for describing the evaluation result to an evaluation feedback device; and
acquiring the feedback information comprises: receiving the feedback information from the evaluation feedback device, the feedback information being obtained by the evaluation feedback device according to the evaluation result.

4. The method of any of the claims 1 to 3, **characterized in that**:
after generating the evaluation result and before acquiring the feedback information, the method further comprises: receiving second data generated subsequently in the production process; and determining a second execution condition of the production process according to the second data based on the mapping rule; and
acquiring the feedback information comprises: determining the feedback information according to a time sequence relationship described in the production plan, the time sequence relationship being a relationship between the second execution condition and the first execution condition.

5. The method of any one of claims 1 to 4, **characterized in that**, if the indication information indicates that the evaluation result is wrong, the feedback information further comprises:
parameter modification information for modifying at least one parameter that describes the mapping rule.

6. A mapping rule updating device, wherein the device comprises:
a mapping unit for receiving first data generated in a production process; and determining a first execution condition of the production process according to the first data based on a mapping rule;
a production process evaluation model unit for generating an evaluation result; the evaluation result being used for indicating whether the first execution condition is in line with a production plan of the production process;
a self-learning unit for acquiring feedback information, and updating the mapping rule according to the feedback information; the feedback information comprising indication information for indicating whether the evaluation result is correct.

7. The device of claim 6, **characterized in that**:
the production process evaluation model unit is further used for, after the evaluation result is generated and before the self-learning unit acquires the feedback information, sending evaluation result information for describing the evaluation result to an evaluation feedback device, the evaluation result information being used for the evaluation feedback device to display the evaluation result to an operator; and
the self-learning unit is specifically used for receiving the feedback information from the evaluation feedback device, the feedback information being input on the evaluation feedback device by the operator according to the evaluation result.

8. The device of claim 6, **characterized in that**:
the production process evaluation model unit is further used for, after the evaluation result is generated and before the self-learning unit acquires the feedback information, sending evaluation result information for describing the evaluation result to an evaluation feedback device; and
the self-learning unit is specifically used for receiving the feedback information from the evaluation feedback device, the feedback information being obtained by the evaluation feedback device according to the evaluation result.

9. The device of claim 6, **characterized in that**:
the mapping unit is further used for, after the production process evaluation model unit generates the evaluation result and before the self-learning unit acquires the feedback information, receiving second data generated subsequently in the production process, and
determining a second execution condition of the production process according to the second data based on the mapping rule;
the production process evaluation model unit is further used for determining the feedback information according to a time sequence relationship described in the production plan, the time sequence relationship being a relationship between the second execution condition and the first execution condition; and
the self-learning unit is specifically used for acquiring the feedback information from the production process evaluation model unit.

10. The device of any one of claims 6 to 9, **characterized in that**, if the indication information indicates that the evaluation result is wrong, the feedback information further comprises:
parameter modification information for modifying at least one parameter that describes the mapping rule.

11. A mapping rule updating device, wherein the device comprises:
a memory for storing a mapping rule;
a receiver for receiving first data generated in a production process; and
a processor for:
determining a first execution condition of the production process according to the first data based on a mapping rule;
generating an evaluation result; the evaluation result being used for indicating whether the first execution condition is in line with a production plan of the production process;
acquiring feedback information, the feedback information comprising indication information for indicating whether the evaluation result is correct; and
updating the mapping rule according to the feedback information.

12. The device of claim 11, **characterized in that**:
the processor is further used for generating evaluation result information for describing the evaluation result; the device further comprises a sender for sending the evaluation result information to an evaluation feedback device, the evaluation result information being used for the evaluation feedback device to display the evaluation result to an operator; the receiver is further used for receiving the feedback information from the evaluation feedback device, the feedback information being input on the evaluation feedback device by the operator according to the evaluation result; and the processor is specifically used for acquiring the feedback information from the receiver; and/or
the processor is further used for generating evaluation result information for describing the evaluation result; the device further comprises a sender for sending the evaluation result information to an evaluation feedback device; the receiver is further used for receiving the feedback information from the evaluation feedback device, the feedback information being obtained and sent by the evaluation feedback device according to the evaluation result; and
the processor is specifically used for acquiring the feedback information from the receiver; and/or
the receiver is further used for receiving, after the processor generates the evaluation result and before acquiring the feedback information, second data generated subsequently in the production process; the processor is further used for determining a second execution condition of the production process according to the second data based on the mapping rule; and the processor is specifically used for determining the feedback information according to a time sequence relationship described in the production plan, the time sequence relationship being a relationship between the second execution condition and the first execution condition; and/or
if the indication information indicates that the evaluation result is wrong, the feedback information further comprises: parameter modification information for modifying at least one parameter that describes the mapping rule.

13. A production process management system, wherein the system comprises:
at least one data collection device for collecting first data generated in a production process, and sending the first data to a mapping rule updating device; and
a mapping rule updating device which is configured for:
receiving the first data;
determining a first execution condition of the production process according to the first data based on a mapping rule;
generating an evaluation result; the evaluation result being used for indicating whether the first execution condition is in line with a production plan of the production process;
acquiring feedback information, the feedback information comprising indication information for indicating whether the evaluation result is correct; and
updating the mapping rule according to the feedback information.

14. The system of claim 13, further comprising:
an evaluation feedback device;
a mapping rule updating device which is configured for sending evaluation result information for describing the evaluation result to the evaluation feedback device;
wherein the evaluation feedback device is configured for receiving the evaluation result information, determining the evaluation result according to the evaluation result information, and displaying the evaluation result to an operator, and receiving the feedback information input by the operator according to the evaluation result, and sending the feedback information to the mapping rule updating device;
alternatively, the evaluation feedback device which is configured for receiving the evaluation result information, determining the feedback information according to the evaluation result information, and sending the feedback information to the mapping rule updating device; and the mapping rule updating device which is specifically configured for receiving the feedback information from the evaluation result information.

15. A computer readable medium, wherein the computer readable medium stores computer instructions thereon, which when executed by a processor, cause the processor to perform the method of any one of claims 1 to 5.
